# EUROPÄISCHE PATENTSCHRIFT

(11) **EP 3 672 147 B1**
(45) Veröffentlichungstag und Bekanntmachung des Hinweises auf die Patenterteilung: **16.04.2025**
(21) Anmeldenummer: 19000566.0
(22) Anmeldetag: 17.12.2019
(51) Int. Cl.: H04L 9/32, G06F 21/60, G06F 21/62, H04L 9/40

(54) **VERFAHREN ZUR ÜBERTRAGUNG VON DATENSÄTZEN, EMPFÄNGERVORRICHTUNG, DATENÜBERTRAGUNGSSYSTEM UND WERTDOKUMENTBEARBEITUNGSSYSTEM**
METHOD FOR TRANSMITTING DATA SETS, RECEIVER DEVICE, DATA TRANSMISSION SYSTEM AND VALUABLE DOCUMENT PROCESSING SYSTEM
PROCÉDÉ DE TRANSMISSION DES ENSEMBLES DE DONNÉES, DISPOSITIF RÉCEPTEUR, SYSTÈME DE TRANSFERT DES DONNÉES ET SYSTÈME DE TRAITEMENT DE DOCUMENT DE VALEUR

(30) Priorität: 19.12.2018 DE 102018010034
(43) Veröffentlichungstag der Anmeldung: 24.06.2020
(73) Patentinhaber: Giesecke+Devrient Currency Technology GmbH, 81677 München (DE)
(72) Erfinder: Fiedler, Michael, 81241 München (DE)
(74) Vertreter: Giesecke+Devrient IP

(56) Entgegenhaltungen:
- US-A1- 2009 187 496
- US-A1- 2015 081 563
- US-A1- 2015 088 752
- US-A1- 2016 132 886

## Beschreibung

Die Erfindung betrifft ein Verfahren zur Übertragung von Datensätzen, eine Empfängervorrichtung, ein Datenübertragungssystem sowie ein Wertdokumentbearbeitungssystem.

Im Zusammenhang mit der automatischen Bearbeitung von Wertdokumenten, insbesondere Banknoten, in sog. Cashcentern kann es vorkommen, dass Datenfiles, in welchen sowohl sachbezogene Daten als auch personenbezogenen Daten enthalten sind, vom Cashcenter (Sender) an eine externe Instanz (Empfänger), beispielsweise einen Hersteller einer Cashcenter-Verwaltungssoftware etwa zum Zweck einer statistischen Auswertung der Daten, übertragen werden. Die sachbezogenen Daten betreffen z.B. die Bezeichnung, den Betrag und die Währung eines im Cashcenter bearbeiteten Deposits von Banknoten, die personenbezogenen Daten enthalten z.B. Daten zum Einzahler des Deposits und/ oder von Cashcenter-Mitarbeitern.

Das jeweils zu übertragene Datenfile kann z.B. einer Tabelle mit mehreren Spalten entsprechen. Falls das zu übertragende Datenfile manuell eingegebene Daten enthält, können in dem Datenfile sachbezogene Daten in unvorhersehbarer Weise mit personenbezogenen Daten gemischt sein. Auch die Struktur des Datenfiles kann von Zeit zu Zeit geändert werden. Zum Beispiel können neue Tabellenspalten hinzukommen oder sich die Verteilung der Daten auf die Tabellenspalten ändern.

Aufgrund von Datenschutzbestimmungen kann es erforderlich sein, die in den Datenfiles jeweils enthaltenen personenbezogenen Daten davor zu schützen, zum Empfänger zu gelangen. Eine automatische Filterung der Daten auf Senderseite, etwa durch gezieltes Löschen der personenbezogenen Daten (z.B. löschen aller Tabellenspalten mit personenbezogenen Daten), ist für den Sender meist aufwändig, da dieser Filter in der Regel ständig aktualisiert werden muss, um ihn an eine ggf. geänderte Struktur der Datenfiles anzupassen.

Die Patentschrift US 2016/132886 offenbart ein Verfahren womit personenbezogenen Daten mittels einer HASH Funktion übertragen und empfängerseitig mit einer "reverse HASH" Funktion zurückgewonnen werden.

Es ist eine Aufgabe der Erfindung, ein Verfahren zur Übertragung von Datensätzen, eine Empfängervorrichtung, ein Datenübertragungssystem sowie ein Wertdokumentbearbeitungssystem anzugeben, welches bzw. welche es auf einfache Weise ermöglicht, dem Empfänger eines Datenfiles nur sachbezogene Daten, aber keine personenbezogenen Daten zur Verfügung zu stellen.

Diese Aufgabe wird durch die Verfahren zur Übertragung von Datensätzen, eine Empfängervorrichtung, ein Datenübertragungssystem sowie ein Wertdokumentbearbeitungssystem gemäß den unabhängigen Ansprüchen gelöst. Bei einem Verfahren zur Übertragung von Datensätzen, welche jeweils Daten einer ersten Kategorie und Daten einer von der ersten Kategorie verschiedenen zweiten Kategorie enthalten, von einem Sender zu einem Empfänger gemäß einem ersten Aspekt der Erfindung werden auf Seiten des Senders die in einem Datensatz jeweils enthaltenen Daten der ersten und zweiten Kategorie unter Verwendung einer Einwegfunktion in Übertragungsdaten umgewandelt, die Übertragungsdaten vom Sender zum Empfänger übertragen und auf Seiten des Empfängers anhand der Übertragungsdaten zumindest ein Teil der in dem Datensatz enthaltenen Daten der zweiten Kategorie unter Verwendung von Rekonstruktionsdaten rekonstruiert, wobei die Rekonstruktionsdaten auf Seiten des Empfängers im Datensatz vermutete Daten der zweiten Kategorie und den vermuteten Daten der zweiten Kategorie zugeordnete Vergleichsdaten, welche durch Umwandlung der vermuteten Daten der zweiten Kategorie unter Verwendung der Einwegfunktion erhalten werden, enthalten.

Eine Empfängervorrichtung zur Verwendung bei einer Übertragung von Datensätzen, welche jeweils Daten einer ersten Kategorie und Daten einer von der ersten Kategorie verschiedenen zweiten Kategorie enthalten, gemäß einem zweiten Aspekt der Erfindung weist auf: eine Datenschnittstelle, welche dazu eingerichtet ist, Übertragungsdaten zu empfangen, in welche die in einem Datensatz enthaltenen Daten der ersten und zweiten Kategorie unter Verwendung einer Einwegfunktion umgewandelt wurden, eine Speichereinrichtung zur Speicherung von Rekonstruktionsdaten, welche im Datensatz vermutete Daten der zweiten Kategorie und den vermuteten Daten der zweiten Kategorie zugeordnete Vergleichsdaten, welche durch Umwandlung der vermuteten Daten der zweiten Kategorie unter Verwendung der Einwegfunktion erhalten werden, enthalten, und eine Analyseeinrichtung, welche dazu eingerichtet ist, anhand der Übertragungsdaten zumindest einen Teil der in dem Datensatz enthaltenen Daten der zweiten Kategorie unter Verwendung der Rekonstruktionsdaten zu rekonstruieren.

Ein Datenübertragungssystem zur Übertragung von Datensätzen, welche jeweils Daten einer ersten Kategorie und Daten einer von der ersten Kategorie verschiedenen zweiten Kategorie enthalten, gemäß einem dritten Aspekt der Erfindung weist auf: eine Sendervorrichtung, die eine Umwandlungseinrichtung aufweist, welche dazu eingerichtet ist, die in einem Datensatz enthaltenen Daten der ersten und zweiten Kategorie unter Verwendung einer Einwegfunktion in Übertragungsdaten umzuwandeln, eine Empfängervorrichtung gemäß dem zweiten Aspekt der Erfindung und eine Übertragungseinrichtung, welche zur Übertragung der Übertragungsdaten von der Sendervorrichtung zur Empfängervorrichtung eingerichtet ist.

Ein Wertdokumentbearbeitungssystem zur Bearbeitung von Wertdokumenten, insbesondere Banknoten, gemäß einem vierten Aspekt der Erfindung weist auf: ein Datenübertragungssystem gemäß dem dritten Aspekt der Erfindung und eine Wertdokumentbearbeitungsvorrichtung, welche dazu eingerichtet ist, von einer Einzahlungsinstanz bereitgestellte Wertdokumente, insbesondere Banknoten, zu bearbeiten, insbesondere zu prüfen, zählen, sortieren, bündeln und/oder verpacken, und Datensätze zu erzeugen, welche jeweils Daten der ersten Kategorie und Daten der zweiten Kategorie enthalten. Die Daten der ersten Kategorie enthalten insbesondere personenbezogene Daten, z.B. Daten zur Identifizierung der Einzahlungsinstanz oder Daten zur Identifizierung der mit der Bearbeitung der Wertdokumente beschäftigten Personen, die z.B. für die Bearbeitung der jeweils eingezahlten Wertdokumente verantwortlich sind. Die Daten der zweiten Kategorie enthalten insbesondere Daten zur Bearbeitung, z.B. betreffend die Prüfung und/oder Zählung und/oder Sortierung und/oder Bündelung und/oder Verpackung, der von der Einzahlungsinstanz bereitgestellten Wertdokumente. Die Wertdokumentbearbeitungsvorrichtung ist dazu eingerichtet, die erzeugten Datensätze an die Umwandlungseinrichtung zu übermitteln und/oder einen Zugriff der Umwandlungseinrichtung auf die erzeugten Datensätze zu ermöglichen.

Bei einem Verfahren zur Übertragung von Datensätzen, welche jeweils Daten einer ersten Kategorie und Daten einer von der ersten Kategorie verschiedenen zweiten Kategorie enthalten, von einem Sender zu einem Empfänger, kann auf Seiten des Empfängers eine Übertragungsdatenliste erstellt werden, welche auf Seiten des Empfängers erwartete Daten der zweiten Kategorie enthält, und die Übertragungsdatenliste vom Empfänger an den Sender übermittelt und/oder dem Sender zur Verfügung gestellt. Auf Seiten des Senders werden die in einem Datensatz jeweils enthaltenen Daten der ersten und zweiten Kategorie unter
Verwendung der vom Empfänger übermittelten bzw. zur Verfügung gestellten Übertragungsdatenliste gefiltert, wobei Übertragungsdaten erhalten werden, welche nur noch in der Übertragungsdatenliste enthaltene Daten der zweiten Kategorie enthalten. Die auf diese Weise erhaltenen Übertragungsdaten werden dann vom Sender zum Empfänger übertragen.

Im Zusammenhang mit der Offenbarung der vorliegenden Erfindung werden die Begriffe "Datenfile", "Datei" und "Datensatz" und deren Pluralformen synonym verwendet.

Aspekte der Erfindung basieren vorzugsweise auf dem Ansatz, die Daten des jeweils zu übertragenden Datenfiles vor dem Versenden zu "verschleiern" und/oder in einen sog. Geheimtext umzuwandeln, d.h. für den Empfänger unlesbar zu machen, und zwar unabhängig davon, ob es sich um Daten der ersten Kategorie, insbesondere personenbezogene Daten, oder um Daten der zweiten Kategorie, insbesondere sachbezogene Daten, handelt, und dem Empfänger die verschleierten Daten zu senden. Dabei werden die Daten vorzugsweise jedes Tabellenfeldes des zu übermittelnden Datenfiles mittels einer Einwegfunktion umgerechnet und durch die dabei erhaltenen Daten ersetzt. Vorzugsweise handelt es sich bei der Einwegfunktion um eine mathematische Relation bzw. Funktion, welche komplexitätstheoretisch leicht berechenbar, aber schwer umzukehren ist und/ oder zu welcher bisher keine in angemessener Zeit praktisch ausführbare Umkehrung bekannt ist. Die bei der Umrechnung erhaltenen Daten, welche im Zusammenhang mit der Erfindung auch als Übertragungsdaten oder verschleierte Daten bezeichnet werden, können somit vom Empfänger - zumindest zunächst - nicht gelesen, d.h. nicht verstanden oder etwa zum Zwecke einer Auswertung verwendet, werden.

Der Empfänger ist jedoch in der Lage, mit Hilfe von Rekonstruktionsdaten zumindest einen Teil der Daten der zweiten Kategorie, insbesondere sachbezogene Daten, wieder zu "entschleiern", d.h. zumindest einen Teil des ursprünglichen Inhalts des betreffenden Tabellenfeldes mit Daten der zweiten Kategorie zu rekonstruieren bzw. in sog. Klartext umzuwandeln. Die Rekonstruktionsdaten basieren vorzugsweise auf einer Kenntnis und/oder Vermutung des Empfängers, die dieser über mögliche Inhalte der Daten der zweiten Kategorie, insbesondere der sachbezogenen Daten, des Datenfiles hat. Die Rekonstruktionsdaten enthalten, vorzugsweise in Tabellenform, erstens die im Datenfile seitens des Empfängers vermuteten Daten der zweiten Kategorie, insbesondere vermutete sachbezogene Daten, und zweitens Vergleichsdaten, die durch Umwandlung der vermuteten Daten unter Verwendung der Einwegfunktion erhalten werden und die in den Rekonstruktionsdaten den jeweiligen Daten der zweiten Kategorie zugeordnet sind. Die hierbei erhaltenen Vergleichsdaten entsprechen also - in gleicher Weise wie auf Seiten des Senders - "verschleierten" erwarteten Daten der zweiten Kategorie. Zum Beispiel liegen die Rekonstruktionsdaten in Form einer Lookup-Tabelle vor, es können aber auch andere Möglichkeiten zur Verknüpfung der Daten verwendet werden.

Die den Vergleichsdaten jeweils zugeordneten erwarteten Daten der zweiten Kategorie, welche den im Datenfile tatsächlich enthaltenen Daten der zweiten Kategorie entsprechen, können z.B. dadurch ermittelt werden, dass die vom Sender übermittelten Übertragungsdaten und die Rekonstruktionsdaten, insbesondere die Vergleichsdaten, miteinander verglichen werden und/oder dadurch, dass die Übertragungsdaten anhand der Rekonstruktionsdaten, insbesondere anhand der Vergleichsdaten, durchsucht werden.

Der Empfänger kann auf diese Weise also zumindest bestimmte Datenfeldeinträge der zweiten Kategorie, die insbesondere vom Empfänger erwartete bzw. vermutete sachbezogene Daten enthalten, wieder entschleiern. Es sind vorzugsweise also nur solche Daten der zweiten Kategorie, insbesondere sachbezogene bzw. nicht personenbezogene Daten, rekonstruierbar, die als vermutete bzw. erwartete Daten in den Rekonstruktionsdaten enthalten sind. Dagegen sind auf Seiten des Empfängers im Datenfile enthaltene Daten der ersten Kategorie nicht oder zumindest nur stark eingeschränkt bzw. mit hohen Unsicherheiten behaftet rekonstruierbar, da bzw. wenn diese Daten auf Seiten des Empfängers nicht vermutete und/oder vom Empfänger nicht vorhersehbare Daten betreffen, wie etwa personenbezogene Daten.

Dadurch, dass vorzugsweise alle im Datenfile enthaltenen Daten sowohl der ersten Kategorie als auch der zweiten Kategorie verschleiert werden, braucht der Sender bei der Verschleierung auch keine Rücksicht nehmen auf eine zwischenzeitlich ggf. geänderte Struktur des Datenfiles, etwa neue Tabellenspalten oder eine geänderte Verteilung der Daten auf die Tabellenspalten. Dadurch lässt sich die Verschleierung für den Sender besonders einfach und zuverlässig realisieren, ohne Datenverluste, z.B. aufgrund fehlerhaften Löschens einer geänderten Tabellenspalte mit relevanten sachbezogenen Daten, befürchten zu müssen.

Verfahren können auch auf dem Ansatz basieren, zusätzlich zum Versenden verschleierter Datenfiles und anschließendem Entschleiern bestimmter Datenfeldeinträge durch den Empfänger, mit Hilfe einer vom Empfänger zur Verfügung gestellten Liste, die auch als Übertragungsdatenliste bezeichnet wird und alle auf Seiten des Empfängers erwarteten Daten der zweiten Kategorie enthält, insbesondere sachbezogene bzw. nicht personenbezogene Datenfeldeinträge, auf Seiten des Senders eine automatische Filterung der Daten vor dem Versenden durchzuführen, so dass in den Übertragungsdaten nur noch die in der Übertragungsdatenliste spezifizierten erwarteten Daten der zweiten Kategorie enthalten sind. Dazu stellt der Empfänger dem Sender die Liste zur Verfügung, beispielsweise durch Übermitteln der Liste und/oder indem er dem Sender Zugriff auf die gespeicherte Liste gewährt. Auf der Senderseite ist vorzugsweise ein automatischer Filter eingerichtet, der für jeden einzelnen Datenfeldeintrag prüft, ob dieser in der zur Verfügung gestellten Übertragungsdatenliste vorhanden ist. Falls ja, wird der jeweilige Datenfeldeintrag im Datenfile belassen. Falls nein, wird der jeweilige Datenfeldeintrag aus dem Datenfile gelöscht. Optional können auf der Senderseite die zur Verfügung gestellten Übermittlungsdaten dahingehend überprüft werden, ob diese tatsächlich nur Daten der zweiten Kategorie betreffen. Werden dabei Daten identifiziert, welche nicht zur zweiten Kategorie, sondern insbesondere zur ersten Kategorie gehören, werden diese bei der vorstehend beschriebenen Filterung nicht berücksichtigt.

Das so gefilterte Datenfile kann dann, vorzugsweise unverschleiert, an den Empfänger übermittelt werden, dem auf diese Weise lediglich Daten der zweiten Kategorie, insbesondere sachbezogene bzw. nicht personenbezogene Daten, nicht aber Daten der ersten Kategorie, insbesondere personenbezogene Daten, zur Verfügung gestellt werden.

Insgesamt ermöglicht es die Erfindung auf einfache Weise, dem Empfänger eines Datenfiles nur Daten einer zweiten Kategorie, insbesondere sachbezogene bzw. nicht personenbezogene Daten, aber keine Daten einer von der zweiten Kategorie verschiedenen ersten Kategorie, insbesondere personenbezogene Daten, zur Verfügung zu stellen.

Vorzugsweise werden beim Rekonstruieren zumindest eines Teils der in dem Datensatz enthaltenen Daten der zweiten Kategorie die Übertragungsdaten mit den in den Rekonstruktionsdaten enthaltenen Vergleichsdaten verglichen. Wenn sich daraus ergibt, dass Übertragungsdaten mit bestimmten Vergleichsdaten übereinstimmen, dann entsprechen die den bestimmten Vergleichsdaten jeweils zugeordneten erwarteten Daten der zweiten Kategorie den im Datenfile tatsächlich enthaltenen Daten der zweiten Kategorie.

Vorzugsweise ist die Einwegfunktion durch eine Hashfunktion und/ oder einen Hash-Algorithmus gegeben. Alternativ oder zusätzlich sind die Übertragungsdaten durch Hashwerte der im Datensatz enthaltenen Daten der ersten und zweiten Kategorie gegeben und/ oder die Vergleichsdaten durch Hashwerte der auf Seiten des Empfängers vermuteten Daten der zweiten Kategorie gegeben. Eine Hashfunktion bzw. ein Hash-Algorithmus ist vorzugsweise eine Abbildung, die eine Zeichenfolge beliebiger Länge (sog. Eingabewert) auf eine Zeichenfolge mit vorzugsweise fester Länge (sog. Hashwert) abbildet. Bei der Umwandlung eines zu übertragenden Datensatzes in Übertragungsdaten werden die im Datensatz jeweils enthaltenen Daten der ersten und zweiten Kategorie hierbei "gehasht", d.h. jeweils durch ihren Hashwert ersetzt. Entsprechendes gilt für die Vergleichsdaten bei der Ermittlung der Rekonstruktionsdaten. Auch wenn das "Hashen" unter Umständen keine absolut sichere Unkenntlichmachung der Daten der ersten Kategorie erlaubt, stellt es zumindest eine relevante Hürde und einen leicht zu bewerkstelligenden Schutz vor einem einfachen, ungeschützten Zugriff auf schützenswerte Daten der ersten Kategorie, wie z.B. personenbezogene Daten, dar.

Vorzugsweise werden die Rekonstruktionsdaten vorab, insbesondere vor dem Vergleichen der Übertragungsdaten mit den Vergleichsdaten, erzeugt. Alternativ oder zusätzlich ist bevorzugt, die Rekonstruktionsdaten in einer Lookup-Tabelle zu speichern. Für das "Entschleiern" der Übertragungsdaten wird hierbei seitens des Empfängers vorzugsweise eine Lookup-Tabelle erstellt, in welcher die vom Empfänger erwarteten sachbezogenen, insbesondere nicht personenbezogenen, Datenfeldeinträge der zweiten Kategorie aufgelistet sind und die zu jedem dieser Datenfeldeinträge den jeweiligen Hashwert angibt. Durch Nachschlagen in der Lookup-Tabelle kann dann empfängerseitig zu jedem verschleierten Datenfeldeintrag der ursprüngliche sachbezogene Datenfeldeintrag im Klartext herausgefunden werden.

Es ist ferner bevorzugt, dass die in den Rekonstruktionsdaten enthaltenen vermuteten Daten der zweiten Kategorie diskrete Werte und/oder Angaben aus einer im Datensatz vermuteten Wertemenge enthalten und die zugehörigen Vergleichsdaten durch Umwandlung der diskreten Werten bzw. Angaben unter Verwendung der Einwegfunktion erhalten werden. Beispielsweise kann es sich hierbei um folgende diskreten Werte und/oder Angaben handeln:
- Statuscodes, welche Statusmeldungen bei der Bearbeitung von Wertdokumenten in einer Wertdokumentbearbeitungsvorrichtung betreffen, wie z.B. "0", "1" oder "404".
- Bei der Bearbeitung von Wertdokumenten ermittelte Stückelungsangaben, wie z.B. "EUR10", "EUR20" oder "EUR50".
- Bei der Bearbeitung von Wertdokumenten übliche Stückzahl- und/ oder Einzahlungssumme eines Deposits, wie z.B. "2500".

Dagegen beziehen sich die in den Rekonstruktionsdaten enthaltenen vermuteten sachbezogenen Daten nicht auf Daten der ersten Kategorie, insbesondere nicht auf personenbezogene Daten, und/oder Angaben, insbesondere Klartextangaben, welche für den Empfänger prinzipiell unbekannt sind bzw. vom Empfänger mangels Kenntnis nicht in dem zu übertragenden Datensatz vermutet werden, wie z.B. Namen von natürlichen und/ oder juristischen Personen, E-Mail-Adressen, Raumbezeichnungen, Kontonummern, Telefonnummern und/oder Personalnummern, z.B. der Einzahlungsinstanz des jeweiligen Deposits von Wertdokumenten und/ oder von im Cashcenter arbeitenden Personen.

Wie bereits erwähnt, enthalten die Daten der ersten Kategorie vorzugsweise personenbezogene Daten und die Daten der zweiten Kategorie vorzugsweise keine personenbezogenen Daten. Im Zusammenhang mit der Offenbarung der vorliegenden Erfindung handelt es sich bei personenbezogenen Daten vorzugswiese um jegliche Angaben über natürliche und juristische Personen und Personengemeinschaften, deren Identität bestimmt oder bestimmbar ist. Dadurch wird sichergestellt, dass der Empfänger anhand der empfangenen Übertragungsdaten lediglich nicht personenbezogene Daten der zweiten Kategorie rekonstruieren kann, so dass auf einfache und zuverlässige Weise einschlägige Datenschutzbestimmungen eingehalten werden können.

Es ist ferner bevorzugt, dass auf Seiten des Senders von einer Einzahlungsinstanz, etwa einer Bank oder einem Groß- oder Einzelhändler, bereitgestellte Wertdokumente, insbesondere Banknoten, mittels einer Wertdokumentbearbeitungsvorrichtung bearbeitet, insbesondere geprüft und/oder gezählt und/ oder sortiert und/ oder gebündelt und/ oder verpackt, werden und Datensätze erzeugt werden, welche jeweils Daten der ersten Kategorie und Daten der zweiten Kategorie enthalten, wobei die Daten der ersten Kategorie, insbesondere personenbezogene, Daten zur Identifizierung der Einzahlungsinstanz oder Daten zur Identifizierung der mit der Bearbeitung der Wertdokumente beschäftigten Personen enthalten und die Daten der zweiten Kategorie Daten zur Bearbeitung, insbesondere betreffend die Prüfung und/oder Zählung und/ oder Sortierung und/oder Bündelung und/ oder Verpackung, der von der Einzahlungsinstanz bereitgestellten Wertdokumente enthalten. Bei dieser bevorzugten Anwendung der Erfindung wird sichergestellt, dass der Empfänger anhand der Übertragungsdaten lediglich sachbezogene Daten im Zusammenhang mit der Bearbeitung der Wertdokumente, nicht jedoch - oder zumindest nur mit erheblich höherem Aufwand und/oder erheblich höherer Unsicherheit - personenbezogene Daten zur Identifizierung der Einzahlungsinstanz oder Daten zur Identifizierung der mit der Bearbeitung der Wertdokumente beschäftigten Personen rekonstruieren kann.

Grundsätzlich ist die Erfindung nicht auf die vorstehend beschriebene bevorzugte Anwendung im Zusammenhang mit Geldeinzahlungen beschränkt, sondern kann auch anderweitig Anwendung finden, z.B. im medizinischen Bereich, wenn es um den Schutz von Patientendaten geht, oder im Transportwesen, wenn es um den Schutz Passagierdaten geht, jedoch sachbezogene bzw. nicht personenbezogene Daten im Zusammenhang mit der Erbringung medizinischer Leistungen bzw. Transportdienstleistungen selbst einer externen Instanz zugänglich gemacht werden sollen.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: ein Beispiel eines Datenübertragungssystems;
- Fig. 2: ein Beispiel eines Datenfiles mit ersten und zweiten Daten und eines daraus erzeugten Umwandlungsdatenfiles; und
- Fig. 3: ein Beispiel einer Lookup-Tabelle und deren Verwendung bei der Rekonstruktion von zweiten Daten.

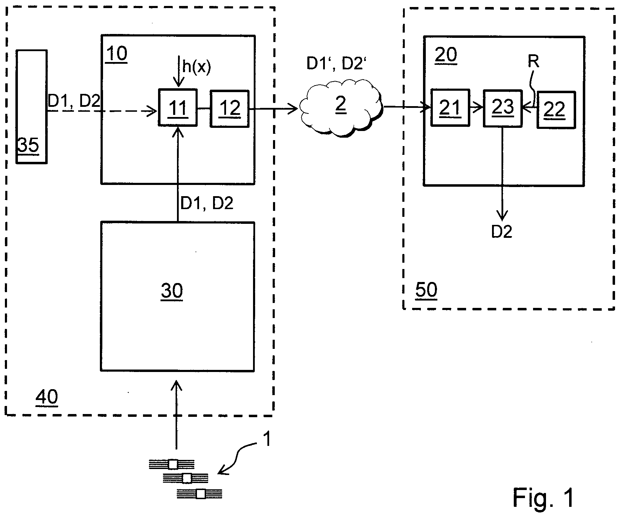

Figur 1 zeigt ein Beispiel eines Datenübertragungssystems, welches anhand einer beispielhaften Anwendung im Zusammenhang mit der automatischen Bearbeitung von Wertdokumenten 1, insbesondere Banknoten, in einem Wertdokumentbearbeitungssystem 40 erläutert wird.

Das Wertdokumentbearbeitungssystem 40 befindet sich beispielsweise in einem sog. Cashcenter, an welches verschiedene Einzahler, wie etwa Geschäftsbanken, Handels- und Dienstleistungsunternehmen, Wertdokumente 1 liefern bzw. einzahlen. Die eingezahlten Wertdokumente 1 werden in einer oder mehreren Wertdokumentbearbeitungsvorrichtungen 30, insbesondere hinsichtlich Echtheit und/oder Zustand, geprüft, wobei sie üblicherweise gezählt werden, um den Wert der jeweiligen Einzahlung zu bestimmen, sowie ggf. sortiert und ggf. gebündelt werden, und z.B. in Behälter oder Folie verpackt werden. Dabei werden Datensätze erzeugt und in Datenfiles gespeichert, welche erste Daten D1 zur Identifikation des jeweiligen Einzahlers, insbesondere Name bzw. Firmenname, und zweite Daten D2 enthalten, die bei der Bearbeitung der jeweils eingezahlten Wertdokumente 1 mittels der Wertdokumentbearbeitungsvorrichtungen 30 gewonnenen wurden, z.B. Daten zur Identität des jeweils eingezahlten Banknoten-Deposits, die Einzahlungssumme und die Währung, enthalten.

Zusätzlich oder alternativ können die oder ein Teil der ersten Daten D1 und/oder die oder ein Teil der zweiten Daten D2 aber auch von einer anderen Stelle 35 des Wertdokumentbearbeitungssystems 40 zur Verfügung gestellt werden, z.B. von einem Rechner oder Server, auf dem eine Cashcenter-Verwaltungssoftware ausgeführt wird, die dazu entsprechende Datensätze erzeugt und in Datenfiles speichert.

Während es sich bei den ersten Daten D1 um personenbezogene Daten handelt, sind die zweiten Daten D2 sachbezogene bzw. nicht personenbezogene Daten. Im Zusammenhang mit der vorliegenden Offenbarung der Erfindung werden die ersten Daten D1 auch als Daten der ersten Kategorie und die zweiten Daten D2 auch als Daten der zweiten Kategorie bezeichnet.

Zum Zweck einer Analyse der bei der Bearbeitung von Wertdokumenten 1 gewonnenen Daten kann es erforderlich oder wünschenswert sein, die Daten an einen Dritten bzw. eine externe Institution 50 zu übermitteln, in welcher anhand der Daten Vorhersagen über die in dem Cashcenter erwarteten Banknoten- bzw. Deposit-Volumina getroffen werden können.

Um der externen Institution 50 die für die Analyse primär interessanten zweiten Daten D2 zur Verfügung zu stellen und gleichzeitig die personenbezogenen ersten Daten D1 vor einem Zugriff zu schützen, ist auf Seiten des Wertdokumentbearbeitungssystems 40 (im Folgenden auch als "Sender" bezeichnet) eine Sendervorrichtung 10 vorgesehen, welche zur Umwandlung der im jeweiligen Datensatz enthaltenen ersten und zweiten Daten D1, D2 in Übertragungsdaten D1', D2' eingerichtet ist. Auf Seiten der externen Institution 50 (im Folgenden auch als "Empfänger" bezeichnet) ist eine Empfängervorrichtung 20 vorgesehen, welche zur zumindest teilweisen Rekonstruktion der im jeweiligen Datensatz enthaltenen zweiten Daten D2 anhand der, beispielsweise mittels Internet 2, an die Empfängervorrichtung 20 übertragenen Übertragungsdaten D1', D2' eingerichtet ist.

Dazu weist die Sendervorrichtung 10 eine Umwandlungseinrichtung 11 auf, in welcher sowohl für die in einem Datensatz enthaltenen ersten Daten D1 als auch für die in diesem Datensatz enthaltenen zweiten Daten D2 mithilfe einer Einwegfunktion, insbesondere einer Hashfunktion h(x), jeweils ein Funktionswert, insbesondere ein Hashwert D1' = h(D1) und D2' = h(D2), bestimmt wird. Der ersten und zweiten Daten D1, D2 werden auf diese Weise "verschleiert" und für den Empfänger zunächst unlesbar.

Die Gesamtheit der hierbei erhaltenen Funktionswerte, insbesondere der Hashwerte D1' und D2' der ersten und zweiten Daten D1 und D2, werden als Übertragungsdaten über eine erste Datenschnittstelle 12, beispielsweise per Internet 2, an eine zweite Datenschnittstelle 21 einer im Bereich der externen Institution 50 vorgesehenen Empfängervorrichtung 20 übermittelt.

Die Empfängervorrichtung 20 weist eine Speichereinrichtung 22 zur Speicherung von Rekonstruktionsdaten R und eine Analyseeinrichtung 23 auf, welche dazu eingerichtet ist, unter Verwendung der Rekonstruktionsdaten R aus den übermittelten Übertragungsdaten D1' und D2' zumindest einen Teil der im jeweiligen Datensatz enthalten zweiten Daten D2 zu rekonstruieren, sozusagen zu "entschleiern".

Eine Rekonstruktion der im jeweiligen Datensatz enthaltenen ersten Daten D1 ist auf Seiten des Empfängers dagegen nicht ohne weiteres möglich, so dass diese "verschleiert" bleiben. Zum Beispiel liegen die auf Seiten des Empfängers rekonstruierten (und damit "lesbaren") zweiten Daten - aufgrund der Verschleierung der zugehörigen personenbezogenen ersten Daten - lediglich anonymisiert vor. Dies wird nachfolgend näher erläutert.

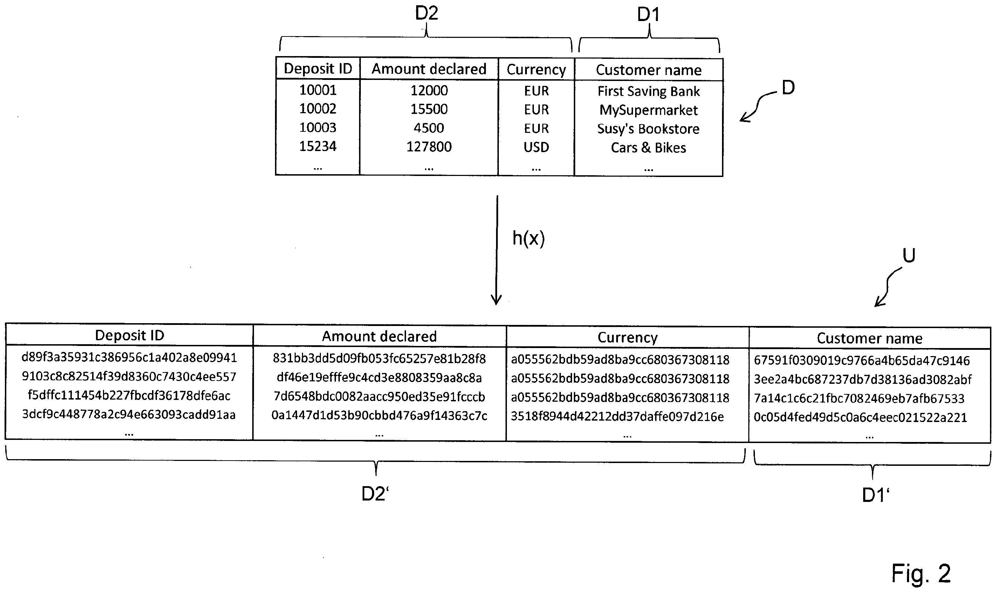

Figur 2 zeigt ein Beispiel eines Datenfiles D mit ersten und zweiten Daten D1, D2 und eines mittels einer Hashfunktion h(x) daraus erzeugten Umwandlungsdatenfiles mit ersten und zweiten Übertragungsdaten D1', D2'. Bei den ersten Daten D1 handelt es sich im vorliegenden Beispiel um die Namen von Kunden ("Customer name") des Cashcenters. Die zweiten Daten D2 beziehen sich auf eine Identifikationsnummer ("Deposit ID"), einen Betrag ("Amount declared") und eine Währung ('Currency") einer vom jeweiligen Kunden vorgenommen Einzahlung von Wertdokumenten.

Die in dem Datenfile D enthaltenen ersten und zweiten Daten D1 und D2 werden mittels einer Hashfunktion h(x) in ihre jeweiligen Hashwerte D1', D2' umgerechnet und in einem entsprechenden Übertragungsdatenfile U gespeichert. Die Hashfunktion h(x) kann z.B. eine kryptographische Hashfunktion sein, die aus den Daten D1, D2 jeweils einen Hashwert bestimmter Länge, z.B. einen 128-Bit-Hashwert, erzeugt. Beispielsweise kann die Hashfunktion h(x) durch einen Message-Digest Algorithm 5 (MD5) realisiert sein.

Das Übertragungsdatenfile U mit den darin enthaltenen Hashwerten D1' und D2' wird von der Sendervorrichtung 10 an die Empfängervorrichtung 20 übertragen, wo aus den empfangenen Hashwerten D1', D2' unter Verwendung von Rekonstruktionsdaten R zumindest ein Teil der zweiten Daten D2 rekonstruiert wird, was nachfolgend näher erläutert wird.

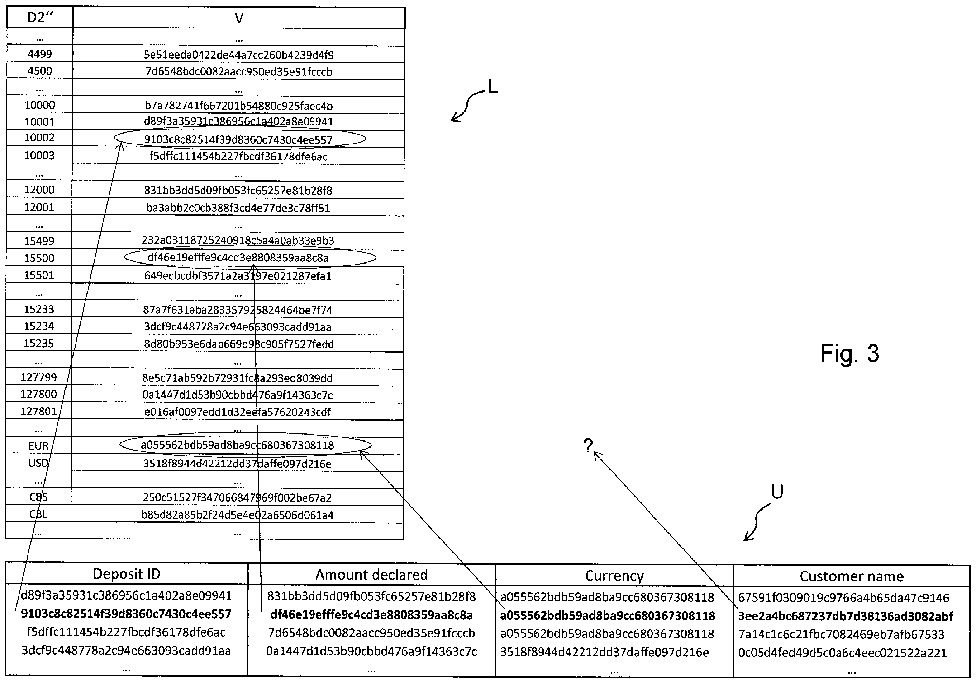

Figur 3 zeigt ein Beispiel einer Lookup-Tabelle L und deren Verwendung bei der Rekonstruktion von zweiten Daten D2 aus den übertragenen Hashwerten D1', D2'.

Die Lookup-Tabelle L kann vorzugsweise auf Seiten des Empfängers unter Berücksichtigung von Kenntnissen und/oder Vermutungen im Hinblick auf den Art und/oder Inhalt der zweiten Daten D2 erzeugt und ggf. erweitert werden und enthält insbesondere eine erste Tabellenspalte mit vermuteten zweiten Daten D2" und eine zweite Tabellenspalte mit Vergleichswerten V, die den vermuteten zweiten Daten D2" jeweils zugeordnet sind. So kann der Empfänger wissen bzw. annehmen, dass z.B. viele sachbezogene bzw. nicht personenbezogene zweite Daten D2 Zahlenwerte sind, d.h. in dem jeweiligen Tabellenfeld des Datenfiles D bzw. Übertragungsdatenfiles U in der Regel keine Buchstaben oder andere Zeichen vorkommen. Beispielsweise liegen die Einzahlungssumme ("Amount declared") und die Deposit-ID als ein bis zu 7-stelliger Zahlenwert vor.

Aufgrund dieses Wissens kann der Empfänger eine Lookup-Tabelle L erstellen, in welcher im dargestellten Beispiel allen zu erwartenden Zahlenwerten D2" die jeweiligen Hashwerte als Vergleichswerte V zugeordnet sind.

Wenn keine Zahlenbereiche prinzipiell ausgeschlossen sind, kann die Lookup-Tabelle L in der Spalte der vermuteten zweiten Daten D2" z.B. alle natürlichen Zahlen von 0 bis 9999999 und in der zweiten Spalte als Vergleichswerte V jeweils den zugehörigen Hashwert enthalten.

Abgesehen von Zahlenwerten sind dem Empfänger auch bestimmte Textangaben oder Buchstabenkombination bekannt, die immer wieder in den sachbezogenen Daten vorkommen. Zum Beispiel enthält die erste Tabellenspalte Währungsangaben, wie USD oder EUR, und Angaben für die Art des Anlieferungsbehälters, in dem die Banknoten der Einzahlung vom Einzahler zum Cashcenter gelangen (wie z.B. CBS für "Canvas Bag small" oder CBL für "Canvas Bag large"). Auch diese, dem Empfänger bekannten Textangaben können in der Lookup-Tabelle L zusammen mit ihrem jeweiligen Hashwert enthalten sein und bei der Rekonstruktion von zweiten Daten D2 herangezogen werden.

Bei der Rekonstruktion werden in der Analyseeinrichtung 23 der Empfängervorrichtung 20 (siehe Fig. 1) die übermittelten Übertragungsdaten D1' und D2' (d.h. die Hashwerte der ersten und zweiten Daten D1 und D2) mit den Vergleichsdaten V (d.h. den Hashwerten der vermuteten zweiten Daten D2") verglichen. Bei Übereinstimmung eines Eintrags der Übertragungsdaten mit einem Eintrag der Vergleichsdaten können für den jeweiligen Eintrag der Übertragungsdaten anhand der der Lookup-Tabelle L die erwarteten zweiten Daten D2" ermittelt werden, da diese in der Lookup-Tabelle L einander zugeordnet sind. Die ermittelten zweiten Daten D2" entsprechen dann den tatsächlich im ursprünglichen Datenfile D enthaltenen zweiten Daten D2 zu dieser Einzahlung.

Dagegen sind dem Empfänger in der Regel keine personenbezogenen Daten, wie z.B. die Kundennamen oder die Mitarbeiternamen des Cashcenters oder unvorhersehbare manuelle Texteingaben bekannt. Für diese personenbezogenen Daten kann der Empfänger keinen zugehörigen Hashwert bestimmen.

Auf diese Weise kann im vorliegenden Beispiel anhand der in der zweiten Zeile des Übertragungsdatenfiles U enthaltenen Hashwerte D2' rekonstruiert werden, dass eine Einzahlung mit der Deposit-ID 10002 im Cashcenter bearbeitet wurde, die eine Summe von 15 500 EUR umfasst hat. Dies sind nur sachbezogene Daten. Die Hashwert des "Customer name" (Hashwert von "MySupermarket") kann mit Hilfe der Lookup-Tabelle L dagegen nicht rekonstruiert werden. Diese personenbezogenen Daten bleiben verschleiert und für den Empfänger nicht lesbar.

Alternativ zum Versenden des verschleierten Übertragungsdatenfiles U und anschließendem Entschleiern bestimmter Datenfeldeinträge durch den Empfänger, kann mit Hilfe einer vom Empfänger zur Verfügung gestellten Liste, die alle zu erwartenden, sachbezogenen Datenfeldeinträge, d.h. Daten der zweiten Kategorie, enthält, auch eine automatische Filterung der Daten auf Seiten des Senders vor dem Versenden durchgeführt werden. Diese Liste wird dem Sender vom Empfänger zur Verfügung gestellt. Dazu ist in der Sendervorrichtung 10 ein automatischer Filter eingerichtet, der für jeden einzelnen Datenfeldeintrag prüft, ob dieser in der Liste vorhanden ist. Falls ja, wird der jeweilige Datenfeldeintrag in dem zu übertragenden Datenfile belassen. Falls nein, wird der jeweilige Datenfeldeintrag aus dem Datenfile gelöscht. Das so gefilterte Datenfile kann dann (unverschleiert) an den Empfänger übermittelt werden, so dass dieser ebenfalls nur Zugriff auf Daten der zweiten Kategorie bzw. nicht personenbezogene Daten hat.

## Patentansprüche

1. Verfahren zur Übertragung von Datensätzen (D), welche jeweils Daten (D1) einer ersten Kategorie und Daten (D2) einer von der ersten Kategorie verschiedenen zweiten Kategorie enthalten, von einem Sender (40) zu einem Empfänger (50), wobei die Daten (D1) der ersten Kategorie personenbezogene Daten enthalten und die Daten (D2) der zweiten Kategorie keine personenbezogenen Daten enthalten, **gekennzeichnet dadurch, dass**:
- auf Seiten des Senders (40) die in einem Datensatz (D) jeweils enthaltenen Daten (D1, D2) der ersten und zweiten Kategorie unter Verwendung einer Einwegfunktion (h(x)) in Übertragungsdaten (U) umgewandelt werden,
- die Übertragungsdaten (U) vom Sender (40) zum Empfänger (50) übertragen werden und
- auf Seiten des Empfängers (50) anhand der Übertragungsdaten (U) zumindest ein Teil der in dem Datensatz (D) enthaltenen Daten (D2) der zweiten Kategorie, die keine personenbezogenen Daten enthalten, unter Verwendung von Rekonstruktionsdaten (R) rekonstruiert werden, wobei die Rekonstruktionsdaten (R) auf Seiten des Empfängers (50) im Datensatz (D) vermutete Daten (D2") der zweiten Kategorie und den vermuteten Daten (D2") der zweiten Kategorie zugeordnete Vergleichsdaten (V), welche durch Umwandlung der vermuteten Daten (D2") der zweiten Kategorie unter Verwendung der Einwegfunktion (h(x)) erhalten werden, enthalten.

2. Verfahren nach Anspruch 1, wobei beim Rekonstruieren zumindest eines Teils der in dem Datensatz enthaltenen Daten (D2) der zweiten Kategorie die Übertragungsdaten (U) mit den Vergleichsdaten (V) verglichen werden.

3. Verfahren nach Anspruch 1 oder 2, wobei die Einwegfunktion (h(x)) durch eine Hashfunktion und/oder einen Hash-Algorithmus gegeben ist.

4. Verfahren nach einem der vorangehenden Ansprüche, wobei die Übertragungsdaten (U) durch Hashwerte (D1', D2') der im Datensatz (D) enthaltenen Daten (D1, D2) der ersten und zweiten Kategorie gegeben sind und/oder die Vergleichsdaten (V) durch Hashwerte der auf Seiten des Empfängers (50) vermuteten Daten (D2") der zweiten Kategorie gegeben sind.

5. Verfahren nach einem der vorangehenden Ansprüche, wobei die Rekonstruktionsdaten (R) vorab, insbesondere vor dem Vergleichen der Übertragungsdaten (U) mit den Vergleichsdaten (V), erzeugt werden.

6. Verfahren nach einem der vorangehenden Ansprüche, wobei die Rekonstruktionsdaten (R) in einer Lookup-Tabelle (L) gespeichert sind bzw. werden.

7. Verfahren nach einem der vorangehenden Ansprüche, wobei die in den Rekonstruktionsdaten (R) enthaltenen
- vermuteten Daten (D2") der zweiten Kategorie diskrete Werte und/oder Angaben aus einer im Datensatz (D) vermuteten Wertemenge enthalten und
- Vergleichsdaten (V) durch Umwandlung der diskreten Werte bzw. Angaben unter Verwendung der Einwegfunktion (h(x)) erhalten werden.

8. Verfahren nach einem der vorangehenden Ansprüche, wobei die in dem Datensatz (D) jeweils enthaltenen Daten (D1, D2) auf Seiten des Senders (40) unter Verwendung der Einwegfunktion (h(x)) unabhängig davon in Übertragungsdaten (U) umgewandelt werden, ob es sich um Daten der ersten Kategorie handelt, die personenbezogene Daten enthalten, oder um Daten der zweiten Kategorie handelt, die keine personenbezogenen Daten enthalten.

9. Verfahren nach einem der vorangehenden Ansprüche, wobei auf Seiten des Senders (40) von einer Einzahlungsinstanz bereitgestellte Wertdokumente (1), insbesondere Banknoten, mittels einer Wertdokumentbearbeitungsvorrichtung (30) bearbeitet, insbesondere geprüft und/oder gezählt und/oder verpackt, werden und Datensätze (D) erzeugt werden, welche jeweils Daten (D1, D2) der ersten Kategorie und Daten der zweiten Kategorie enthalten, wobei die Daten (D1) der ersten Kategorie personenbezogene Daten zur Identifizierung der Einzahlungsinstanz und/oder Daten zur Identifizierung der mit der Bearbeitung der Wertdokumente beschäftigten Personen enthalten, und die Daten (D2) der zweiten Kategorie Daten zur Bearbeitung, insbesondere betreffend die Prüfung und/oder Zählung und/ oder Verpackung, der von der Einzahlungsinstanz bereitgestellten Wertdokumente (1) enthalten.

10. Empfängervorrichtung (20) zur Verwendung bei einer Übertragung von Datensätzen (D), welche jeweils Daten (D1) einer ersten Kategorie und Daten (D2) einer von der ersten Kategorie verschiedenen zweiten Kategorie enthalten, wobei die Daten (D1) der ersten Kategorie personenbezogene Daten enthalten und die Daten (D2) der zweiten Kategorie keine personenbezogenen Daten enthalten, mit
- einer Datenschnittstelle (21), welche dazu eingerichtet ist, Übertragungsdaten (U) zu empfangen, in welche die in einem Datensatz (D) enthaltenen Daten (D1, D2) der ersten und zweiten Kategorie unter Verwendung einer Einwegfunktion (h(x)) umgewandelt wurden,
- einer Speichereinrichtung (22) zur Speicherung von Rekonstruktionsdaten (R), welche im Datensatz (D) vermutete Daten (D2") der zweiten Kategorie und den vermuteten Daten (D2") der zweiten Kategorie zugeordnete Vergleichsdaten (V) enthalten, welche durch Umwandlung der vermuteten Daten (D2") der zweiten Kategorie unter Verwendung der Einwegfunktion (h(x)) erhalten werden, und
- einer Analyseeinrichtung (23), welche dazu eingerichtet ist, anhand der Übertragungsdaten (U) zumindest einen Teil der in dem Datensatz enthaltenen Daten (D2) der zweiten Kategorie, die keine personenbezogenen Daten enthalten, unter Verwendung der Rekonstruktionsdaten (R) zu rekonstruieren.

11. Datenübertragungssystem zur Übertragung von Datensätzen (D), welche jeweils Daten (D1) einer ersten Kategorie und Daten (D2) einer von der ersten Kategorie verschiedenen zweiten Kategorie enthalten, mit
- einer Sendervorrichtung (10), die eine Umwandlungseinrichtung (11) aufweist, welche dazu eingerichtet ist, die in einem Datensatz (D) enthaltenen Daten (D1, D2) der ersten und zweiten Kategorie unter Verwendung einer Einwegfunktion (h(x)) in Übertragungsdaten (U) umzuwandeln, wobei die Daten (D1) der ersten Kategorie personenbezogene Daten enthalten und die Daten (D2) der zweiten Kategorie keine personenbezogenen Daten enthalten,
- einer Empfängervorrichtung (20) nach Anspruch 10 und
- einer Übertragungseinrichtung (2), welche zur Übertragung der Übertragungsdaten (U) von der Sendervorrichtung (10) zur Empfängervorrichtung (20) eingerichtet ist.

12. Wertdokumentbearbeitungssystem (40) zur Bearbeitung von Wertdokumenten (1), insbesondere Banknoten, mit einem Datenübertragungssystem (2, 10, 20) nach Anspruch 11 und einer Wertdokumentbearbeitungsvorrichtung (30), welche dazu eingerichtet ist, von einer Einzahlungsinstanz bereitgestellte Wertdokumente (1), insbesondere Banknoten, zu bearbeiten, insbesondere zu prüfen und/oder zu zählen und/oder zu verpacken,
wobei die Wertdokumentbearbeitungsvorrichtung (30) und/oder eine andere Stelle (35) des Wertdokumentbearbeitungssystems (40) dazu eingerichtet ist,
- Datensätze (D) zu erzeugen, welche jeweils Daten (D1) der ersten Kategorie und Daten (D2) der zweiten Kategorie enthalten, wobei die Daten (D1) der ersten Kategorie personenbezogene Daten enthalten und die Daten (D2) der zweiten Kategorie Daten zur Bearbeitung der von der Einzahlungsinstanz bereitgestellten Wertdokumente (1) enthalten, und
- die erzeugten Datensätze (D) an die Umwandlungseinrichtung (11) zu übermitteln und/oder einen Zugriff der Umwandlungseinrichtung (11) auf die erzeugten Datensätze (D) zu ermöglichen.

13. Wertdokumentbearbeitungssystem (40) nach Anspruch 12, wobei die Daten (D1) der ersten Kategorie personenbezogene Daten zur Identifizierung der Einzahlungsinstanz und/oder Daten zur Identifizierung der mit der Bearbeitung der Wertdokumente beschäftigten Personen enthalten.

14. Wertdokumentbearbeitungssystem (40) nach Anspruch 12 oder 13, wobei die Daten (D2) der zweiten Kategorie Daten betreffend die Prüfung und/oder Zählung und/oder Verpackung der von der Einzahlungsinstanz bereitgestellten Wertdokumente (1) enthalten.

## Claims

1. Method for transmitting data sets (D), each containing data (D1) of a first category and data (D2) of a second category different from the first category, from a transmitter (40) to a receiver (50), wherein the data (D1) of the first category contain personal data and the data (D2) of the second category do not contain any personal data, **characterized in that**:
- on the side of the transmitter (40), the data (D1, D2) of the first and second categories respectively contained in a data set (D) are converted into transmission data (U) using a one-way function (h(x)),
- the transmission data (U) are transmitted from the transmitter (40) to the receiver (50), and
- on the side of the receiver (50), at least some of the data (D2) of the second category, which are contained in the data set (D) and do not contain any personal data, are reconstructed using reconstruction data (R) on the basis of the transmission data (U), wherein the reconstruction data (R) on the side of the receiver (50) contain data (D2'') of the second category suspected in the data set (D) and comparison data (V) which are assigned to the suspected data (D2'') of the second category and are obtained by converting the suspected data (D2") of the second category using the one-way function (h(x)).

2. Method according to Claim 1, wherein, when reconstructing at least some of the data (D2) of the second category contained in the data set, the transmission data (U) are compared with the comparison data (V).

3. Method according to Claim 1 or 2, wherein the one-way function (h(x)) is given by a hash function and/or a hash algorithm.

4. Method according to one of the preceding claims, wherein the transmission data (U) are given by hash values (D1', D2') of the data (D1, D2) of the first and second categories contained in the data set (D) and/or the comparison data (V) are given by hash values of the data (D2") of the second category suspected on the side of the receiver (50).

5. Method according to one of the preceding claims, wherein the reconstruction data (R) are generated in advance, in particular before the transmission data (U) are compared with the comparison data (V).

6. Method according to one of the preceding claims, wherein the reconstruction data (R) have been or are stored in a lookup table (L).

7. Method according to one of the preceding claims, wherein
- the suspected data (D2'') of the second category contained in the reconstruction data (R) contain discrete values and/or information from a value set suspected in the data set (D), and
- the comparison data (V) contained in the reconstruction data (R) are obtained by converting the discrete values or information using the one-way function (h(x)).

8. Method according to one of the preceding claims, wherein the data (D1, D2) contained in the data set (D) in each case on the side of the transmitter (40) are converted into transmission data (U) using the one-way function (h(x)) regardless of whether they are data of the first category containing personal data, or data of the second category that do not contain any personal data.

9. Method according to one of the preceding claims, wherein valuable documents (1), in particular banknotes, provided by a payment entity on the side of the transmitter (40) are processed, in particular checked and/or counted and/or packaged, by means of a valuable document processing apparatus (30) and data sets (D) each containing data (D1, D2) of the first category and data of the second category are generated, wherein the data (D1) of the first category contain personal data for identifying the payment entity and/or data for identifying the persons involved in the processing of the valuable documents, and the data (D2) of the second category contain data for processing, in particular concerning the checking and/or counting and/or packaging, of the valuable documents (1) provided by the payment entity.

10. Receiver apparatus (20) for use when transmitting data sets (D) each containing data (D1) of a first category and data (D2) of a second category different from the first category, wherein the data (D1) of the first category contain personal data and the data (D2) of the second category do not contain any personal data, having
- a data interface (21) which is configured to receive transmission data (U), into which the data (D1, D2) of the first and second categories contained in a data set (D) were converted using a one-way function (h(x)),
- a storage device (22) for storing reconstruction data (R) which contain data (D2'') of the second category suspected in the data set (D) and comparison data (V) which are assigned to the suspected data (D2'') of the second category and are obtained by converting the suspected data (D2'') of the second category using the one-way function (h(x)), and
- an analysis device (23) which is configured to reconstruct at least some of the data (D2) of the second category, which are contained in the data set and do not contain any personal data, using the reconstruction data (R) on the basis of the transmission data (U).

11. Data transmission system for transmitting data sets (D) each containing data (D1) of a first category and data (D2) of a second category different from the first category, having
- a transmitter apparatus (10) having a conversion device (11) which is configured to convert the data (D1, D2) of the first and second categories contained in a data set (D) into transmission data (U) using a one-way function (h(x)), wherein the data (D1) of the first category contain personal data and the data (D2) of the second category do not contain any personal data,
- a receiver apparatus (20) according to Claim 10, and
- a transmission device (2) which is configured to transmit the transmission data (U) from the transmitter apparatus (10) to the receiver apparatus (20).

12. Valuable document processing system (40) for processing valuable documents (1), in particular banknotes, having a data transmission system (2, 10, 20) according to Claim 11 and a valuable document processing apparatus (30) which is configured to process, in particular to check and/or to count and/or to package, valuable documents (1), in particular banknotes, provided by a payment entity,
wherein the valuable document processing apparatus (30) and/or another location (35) of the valuable document processing system (40) is/are configured
- to generate data sets (D) each containing data (D1) of the first category and data (D2) of the second category, wherein the data (D1) of the first category contain personal data and the data (D2) of the second category contain data for processing the valuable documents (1) provided by the payment entity, and
- to transmit the generated data sets (D) to the conversion device (11) and/or to make it possible for the conversion device (11) to access the generated data sets (D).

13. Valuable document processing system (40) according to Claim 12, wherein the data (D1) of the first category contain personal data for identifying the payment entity and/or data for identifying the persons involved in the processing of the valuable documents.

14. Valuable document processing system (40) according to Claim 12 or 13, wherein the data (D2) of the second category contain data concerning the checking and/or counting and/or packaging of the valuable documents (1) provided by the payment entity.

## Revendications

1. Procédé de transmission d'ensembles de données (D), qui contiennent respectivement des données (D1) d'une première catégorie et des données (D2) d'une deuxième catégorie différente de la première catégorie, d'un émetteur (40) à un récepteur (50), les données (D1) de la première catégorie contenant des données à caractère personnel et les données (D2) de la deuxième catégorie ne contenant pas de données à caractère personnel, **caractérisé en ce que** :
- du côté de l'émetteur (40), les données (D1, D2) des première et deuxième catégories respectivement contenues dans un ensemble de données (D) sont converties en données de transmission (U) à l'aide d'une fonction unidirectionnelle (h(x)),
- les données de transmission (U) sont transmises de l'émetteur (40) au récepteur (50), et
- du côté du récepteur (50), sur la base des données de transmission (U), au moins une partie des données (D2) de la deuxième catégorie contenues dans l'ensemble de données (D), qui ne contiennent pas de données à caractère personnel, sont reconstruites par utilisation de données de reconstruction (R), les données de reconstruction (R) contenant, du côté du récepteur (50), des données supposées (D2") de la deuxième catégorie dans l'ensemble de données (D) et des données de comparaison (V) associées aux données supposées (D2") de la deuxième catégorie, qui sont obtenues par conversion des données supposées (D2") de la deuxième catégorie par utilisation de la fonction unidirectionnelle (h(x)).

2. Procédé selon la revendication 1, dans lequel, lors de la reconstruction d'au moins une partie des données (D2) de la deuxième catégorie contenues dans l'ensemble de données, les données de transmission (U) sont comparées aux données de comparaison (V).

3. Procédé selon la revendication 1 ou 2, dans lequel la fonction unidirectionnelle (h(x)) est définie par une fonction de hachage et/ou un algorithme de hachage.

4. Procédé selon l'une quelconque des revendications précédentes, dans lequel les données de transmission (U) sont définies par des valeurs de hachage (D1', D2') des données (D1, D2) des première et deuxième catégories contenues dans l'ensemble de données (D) et/ou les données de comparaison (V) sont définies par des valeurs de hachage des données supposées (D2'') de la deuxième catégorie du côté du récepteur (50).

5. Procédé selon l'une quelconque des revendications précédentes, dans lequel les données de reconstruction (R) sont générées à l'avance, notamment avant la comparaison des données de transmission (U) aux données de comparaison (V).

6. Procédé selon l'une quelconque des revendications précédentes, dans lequel les données de reconstruction (R) sont ou seront stockées dans une table de consultation (L).

7. Procédé selon l'une quelconque des revendications précédentes, dans lequel les données contenues dans les données de reconstruction (R), à savoir
- les données supposées (D2") de la deuxième catégorie contiennent des valeurs discrètes et/ou des indications provenant d'un ensemble de valeurs supposées dans l'ensemble de données (D) et
- les données de comparaison (V) sont obtenues par conversion des valeurs discrètes ou des indications par utilisation de la fonction unidirectionnelle (h(x)).

8. Procédé selon l'une quelconque des revendications précédentes, dans lequel les données (D1, D2) respectivement contenues dans l'ensemble de données (D) sont converties en données de transmission (U) du côté de l'émetteur (40) par utilisation de la fonction unidirectionnelle (h(x)), indépendamment du fait qu'il s'agisse de données de la première catégorie, qui contiennent des données à caractère personnel, ou de données de la deuxième catégorie, qui ne contiennent pas de données à caractère personnel.

9. Procédé selon l'une quelconque des revendications précédentes, dans lequel, du côté de l'émetteur (40), des documents de valeur (1), notamment des billets de banque, mis à disposition par une entité de dépôt, sont traités, notamment vérifiés et/ou comptés et/ou empaquetés, au moyen d'un dispositif de traitement de documents de valeur (30), et des ensembles de données (D) sont générés, lesquels contiennent respectivement des données (D1, D2) de la première catégorie et des données de la deuxième catégorie, les données (D1) de la première catégorie contenant des données à caractère personnel permettant d'identifier l'entité de dépôt et/ou des données permettant d'identifier les personnes chargées du traitement des documents de valeur, et les données (D2) de la deuxième catégorie contenant des données permettant le traitement, notamment en ce qui concerne la vérification et/ou le comptage et/ou l'empaquetage, des documents de valeur (1) mis à disposition par l'entité de dépôt.

10. Dispositif récepteur (20) destiné à être utilisé lors d'une transmission d'ensembles de données (D) contenant respectivement des données (D1) d'une première catégorie et des données (D2) d'une deuxième catégorie différente de la première catégorie, les données (D1) de la première catégorie contenant des données à caractère personnel et les données (D2) de la deuxième catégorie ne contenant pas de données à caractère personnel, comprenant
- une interface de données (21) conçue pour recevoir des données de transmission (U) dans lesquelles les données (D1, D2) des première et deuxième catégories contenues dans un ensemble de données (D) ont été converties à l'aide d'une fonction unidirectionnelle (h(x)),
- un moyen de stockage (22) destiné à stocker des données de reconstruction (R) contenant des données supposées (D2") de la deuxième catégorie dans l'ensemble de données (D) et des données de comparaison (V) associées aux données supposées (D2'') de la deuxième catégorie, qui sont obtenues par conversion des données supposées (D2'') de la deuxième catégorie par utilisation de la fonction unidirectionnelle (h(x)), et
- un moyen d'analyse (23) conçu pour reconstruire, sur la base des données de transmission (U), au moins une partie des données (D2) de la deuxième catégorie contenues dans l'ensemble de données, qui ne contiennent pas de données à caractère personnel, par utilisation des données de reconstruction (R).

11. Système de transmission de données destiné à transmettre des ensembles de données (D), contenant respectivement des données (D1) d'une première catégorie et des données (D2) d'une deuxième catégorie différente de la première catégorie, comprenant
- un dispositif émetteur (10) comportant un dispositif de conversion (11) conçu pour convertir les données (D1, D2) des première et deuxième catégories contenues dans un ensemble de données (D) en données de transmission (U) à l'aide d'une fonction unidirectionnelle (h(x)), les données (D1) de la première catégorie contenant des données à caractère personnel et les données (D2) de la deuxième catégorie ne contenant pas de données à caractère personnel,
- un dispositif récepteur (20) selon la revendication 10 et
- un dispositif de transmission (2) conçu pour transmettre les données de transmission (U) du dispositif émetteur (10) au dispositif récepteur (20).

12. Système de traitement de documents de valeur (40) destiné à traiter des documents de valeur (1), notamment des billets de banque, comprenant un système de transmission de données (2, 10, 20) selon la revendication 11 et un dispositif de traitement de documents de valeur (30) conçu pour traiter des documents de valeur (1), notamment des billets de banque, mis à disposition par une entité de dépôt, notamment à des fins de vérification et/ou de comptage et/ou d'empaquetage, le dispositif de traitement de documents de valeur (30) et/ou un autre poste (35) du système de traitement de documents de valeur (40) étant conçu pour
- générer des ensembles de données (D) contenant respectivement des données (D1) de la première catégorie et des données (D2) de la deuxième catégorie, les données (D1) de la première catégorie contenant des données à caractère personnel et les données (D2) de la deuxième catégorie contenant des données permettant de traiter les documents de valeur (1) mis à disposition par l'entité de dépôt, et
- transmettre les ensembles de données (D) générés au dispositif de conversion (11) et/ou permettre un accès du dispositif de conversion (11) aux ensembles de données (D) générés.

13. Système de traitement de documents de valeur (40) selon la revendication 12, dans lequel les données (D1) de la première catégorie contiennent des données à caractère personnel permettant d'identifier l'entité de dépôt et/ou des données permettant d'identifier les personnes chargées du traitement des documents de valeur.

14. Système de traitement de documents de valeur (40) selon la revendication 12 ou 13, dans lequel les données (D2) de la deuxième catégorie contiennent des données relatives à la vérification et/ou au comptage et/ou à l'empaquetage des documents de valeur (1) mis à disposition par l'entité de dépôt.
